# EUROPÄISCHE PATENTSCHRIFT

(11) **EP 2 697 106 B1**
(45) Veröffentlichungstag und Bekanntmachung des Hinweises auf die Patenterteilung: **24.10.2018**
(21) Anmeldenummer: 12715043.1
(22) Anmeldetag: 05.04.2012
(51) Int. Cl.: B60T 17/22, B60T 13/52

(54) **VERFAHREN ZUM BETREIBEN EINES BREMSSYSTEM**
METHOD FOR OPERATING A BRAKING SYSTEM
PROCÉDÉ PERMETTANT DE FAIRE FONCTIONNER UN SYSTÈME DE FREINAGE

(30) Priorität: 11.04.2011 DE 102011007164
(43) Veröffentlichungstag der Anmeldung: 19.02.2014
(73) Patentinhaber: Continental Teves AG & Co. OHG, 60488 Frankfurt am Main (DE)
(72) Erfinder: GRUBER, Steffen, 63801 Kleinostheim (DE); ULLRICH, Thorsten, 64579 Gernsheim (DE); ROSS, Scott, 61440 Oberursel (DE); PEICHL, Thomas, 61206 Wöllstadt (DE)
(86) Internationale Anmeldenummer: PCT/EP2012/056334
(87) Internationale Veröffentlichungsnummer: WO 2012/139979

(56) Entgegenhaltungen:
- EP-A2- 1 114 925

## Beschreibung

Die Erfindung betrifft ein Verfahren gemäß Oberbegriff von Anspruch 1 und ein Bremssystem gemäß Oberbegriff von Anspruch 12 sowie die Verwendung des Bremssystems in einem Kraftfahrzeug.
Moderne Kraftfahrzeuge müssen hinsichtlich Komfort und Sicherheit hohen Anforderungen genügen. Um auch größere Fahrzeugverzögerungen mit einem vertretbaren Pedalkraftaufwand zu erreichen, wird die vom Fahrer aufgebrachte Betätigungskraft am Bremspedal durch die Hilfskraft eines Bremskraftverstärkers verstärkt. Besonders verbreitet sind Vakuum- bzw. Unterdruckbremskraftverstärker, welche einen Unterdruck (bzw. die Druckdifferenz zwischen einer Unterdruckkammer und einer nach Maßgabe der Bremspedalbetätigung belüfteten Arbeitskammer) als Energiequelle nutzen. Dieser kann über ein Saugrohr eines Verbrennungsmotors oder eine motorbetriebene Vakuumpumpe erzeugt bzw. aufrecht erhalten werden. Ohne die kontinuierliche Evakuierung der Unterdruckkammer/n würde ein Vakuumbremskraftverstärker nach wenigen Bremsvorgängen seine Funktion nicht mehr erfüllen können, da während jeder Bremsung Luft einströmt.
Aus der DE 10 2007 027 768 A1 ist ein Verfahren zum Bereitstellen von Unterdruck einer Bremsbetätigungsvorrichtung einer Kraftfahrzeugbremsanlage bekannt, die einen pneumatischen Bremskraftverstärker umfasst, dessen Innenraum in wenigstens eine Unterdruckkammer und eine Arbeitskammer unterteilt ist. Ein Vakuumsensor erfasst ein Druckniveau in der Unterdruckkammer und/oder den Druckunterschied zwischen der Unterdruckkammer und der Arbeitskammer. Sobald ein erstes Unterdruckniveau in der Unterdruckkammer unterschritten ist (bzw. der Druck in der Unterdruckkammer zu hoch ist), wird ein pneumatisches Motor-Pumpenaggregat aktiviert; bei Erreichen eines zweiten Unterdruckniveaus (bzw. Unterschreiten eines Absolutdruckschwellenwerts) in der Unterdruckkammer wird das Motor-Pumpenaggregat abgeschaltet.

Für sicherheitsrelevante Komponenten bzw. Systeme in Kraftfahrzeugen sind auch für Fehlerszenarien und Rückfallebenen konkrete Anforderungskriterien definiert, wie z.B. in der ECE R13H für Pkw-Bremssysteme. Um auch im Fehlerfall eine geforderte Mindestverzögerung sicherstellen zu können, kann es daher erforderlich sein, einen Defekt des Vakuumsensors zu erkennen und/oder auch bei einem defekten Vakuumsensor den Unterdruck im Vakuum- bzw. Unterdruckbremskraftverstärker zumindest näherungsweise zu bestimmen. Somit können Maßnahmen zur Sicherstellung der erforderlichen Bremsverzögerung eingeleitet werden.

Die DE 10 2007 003 741 A1 offenbart ein Verfahren zum Betrieb eines Unterdruckbremskraftverstärkers einer Fahrzeugbremsanlage, mit einem Gehäuse, das durch eine bewegliche Trennwand (bzw. eine Membran) in mindestens eine Unterdruckkammer und mindestens eine Arbeitskammer unterteilt ist. Eine Sensoreinheit sensiert den Druck in der Unterdruckkammer und führt diesen einer elektronischen Steuereinheit zu, die allein auf Grundlage des in der Unterdruckkammer herrschenden Drucks den Aussteuerpunkt des Unterdruckbremskraftverstärkers berechnet. Der Aussteuerpunkt bezeichnet einen Zustand, bei dem eine weitere Erhöhung des Bremsdrucks nur durch eine Steigerung der Pedalkraft möglich ist, da der Unterdruckbremskraftverstärker die maximal mögliche Unterstützungskraft erreicht hat. Um mögliche Defekte der Sensoreinheit oder des Unterdruckbremskraftverstärkers (bzw. der Vakuumpumpe) zu ermitteln, wird eine Plausibilisierung des von der Sensoreinheit gemessenen Druckwerts durchgeführt, indem ein Modell gebildet wird, das auf Grundlage empirisch ermittelter Daten in Verbindung mit strömungstechnischen und thermodynamischen Vorgängen die Zustandsgrößen in der Unterdruckkammer und der Arbeitskammer schätzt.

Aus der gattungsbildenden EP 1 114 925 A1 ist ein Verfahren zur Ermittlung des Drucks in einem Bremskraftverstärker bekannt, der über ein Rückschlagventil mit einem Saugrohr eines Verbrennungsmotors verbunden ist. Das Verfahren umfasst die Schritte
- Messen eines Betriebsparameters wie eines Saugrohrdrucks oder einer Bremspedalbetätigung
- Berechnen eines geschätzten Drucks im Bremskraftverstärker basierend auf dem Betriebsparameter.

Die Aufgabe der vorliegenden Erfindung besteht darin, eine von einem Sensor zur Erfassung des Drucks in mindestens einer Kammer des Bremskraftverstärkers unabhängige Abschätzung bzw. Plausibilisierung der Druckdifferenz in einem Bremskraftverstärker zu ermöglichen.

Diese Aufgabe wird durch ein Verfahren gemäß Anspruch 1 gelöst.

Es wird also ein Verfahren zum Betreiben eines Bremssystems mit einem Bremskraftverstärker, der durch mindestens eine bewegliche Trennwand in mindestens eine Unterdruckkammer und mindestens eine Arbeitskammer geteilt ist, wobei mindestens eine Unterdruckkammer mit einer Unterdruckquelle zum Aufbau eines Unterdrucks verbunden ist oder verbunden werden kann, mit mindestens einem Sensor, der mindestens eine Größe wie Weg und/oder Winkel und/oder Kraft einer Bremspedalbetätigung und/oder einen Bremsdruck erfasst, welcher in mindestens einem mit dem Bremskraftverstärker verbundenen Hauptbremszylinder nach Maßgabe einer Bremspedalbetätigung aufgebaut wird, bereitgestellt. Erfindungsgemäß erfolgt eine Abschätzung des verbleibenden Unterdrucks in mindestens einer Unterdruckkammer aus einer Betrachtung bereits erfolgter Bremspedalbetätigungen auf Grundlage mindestens einer der erfassten Größen.

Hierbei wird eine z.B. anhand Messungen vorgenommene Kalibrierung des Zusammenhangs zwischen Bremspedalbetätigung und Vakuum in der Unterdruckkammer des Bremskraftverstärkers genutzt, um eine von einem Drucksensor in der Unterdruckkammer bzw. einem Vakuumsensor unabhängige Abschätzung des zur Verfügung stehenden Unterdrucks vorzunehmen. Der komplette oder teilweise Ersatz der typischerweise einfach oder redundant eingesetzten Vakuumsensoren durch die direkte messtechnische Erfassung des Fahrerwunsches z.B. anhand von Bremspedalweg oder Bremspedalkraft hat eine Reihe von Vorteilen zur Folge:
- Eine bisher eingesetzte redundante Messwerterfassung des Vakuums bzw. Drucks in der Unterdruckkammer kann vereinfacht werden, indem bereits für andere Einsatzzwecke vorhandenen Sensoren mitbenutzt werden. Dies verringert die Kosten des Bremssystems, ohne dass die Zuverlässigkeit abnimmt.
- Neben dem Entfall bzw. dem Ersatz eines ansonsten benötigten Vakuumsensors durch eine andere, den Fahrerwunsch widerspiegelnde Messgröße, kann auch die Anzahl der Ansschlusspins bzw. Sensoreingänge im Steuergerät verringert werden, wodurch die Kosten weiter verringert werden.
- Darüber hinaus verringert sich sowohl das Systemgesamtgewicht als auch der benötigte Bauraum, so dass Fahrzeuge mit gleicher Funktion kleiner und leichter werden, was sowohl Agilität als auch Umweltverträglichkeit erhöht.

Zweckmäßigerweise wird nach Maßgabe oder proportional zu mindestens einer der erfassten Größen ein Bremsmoment erzeugt, indem mindestens ein elektrischer Antrieb des Fahrzeugs als Generator betrieben wird und/oder in mindestens einer Radbremse des Fahrzeugs durch einen mit dem Bremskraftverstärker verbundenen Hauptbremszylinder Bremsdruck aufgebaut wird. Fahrzeuge mit einem ganz oder teilweise elektrischen Antrieb weisen zweckmäßigerweise einen Pedalwinkelsensor bzw. einen Pedalwegsensor zur Erfassung des Fahrerwunsches auf, um bei geringen Verzögerungen eine rein regenerative Bremsung mit entsprechend hoher Effizienz der Rekuperation zu ermöglichen. Dieser stellt somit einen geeigneten Sensor für die Abschätzung des verbleibenden Unterdrucks nach dem erfindungsgemäßen Verfahren dar, welcher ohne zusätzliche Kosten bereits vorhanden ist.

Bevorzugt umfasst die zur Abschätzung des verbleibenden Unterdrucks stattfindende Betrachtung bereits erfolgter Bremspedalbetätigungen eine Integration oder Summenbildung über mehrere zeitlich aufeinanderfolgende Werte mindestens einer der erfassten Größen. Gegenüber einem System mit redundantem Sensor oder einer aufwendigen Modellberechnung verringert sich der benötigte Entwicklungs- und Produktionsaufwand erheblich.

Besonders bevorzugt nimmt der abgeschätzte verbleibende Unterdruck mit steigender aktuell bestimmter Summe oder steigendem aktuell bestimmten Integral über mehrere zeitlich aufeinanderfolgende Werte mindestens einer der erfassten Größen ab. Die Auslegung des Bremssystems wird ganz besonders bevorzugt dadurch berücksichtigt, dass eine Kennlinie ausgewertet wird, die eine Kalibrierung des Zusammenhangs zwischen der summierten Größe oder dem Integral über der Größe und dem verbleibenden Unterdruck erlaubt. Eine derartige Kennlinie kann durch Messungen bestimmt oder aus bekannten Parametern, die z.B. die Geometrie des Bremssystems beschreiben, berechnet werden. Wenn der Einfluss mehrerer Parameter ermittelt wurde, kann dieser in Form eines Kennfelds im Speicher eines Steuergeräts abgelegt werden.

Besonders bevorzugt ist mindestens eine Unterdruckkammer mit einem Motor-Pumpenaggregat verbunden, welches als alleinige oder zusätzliche Unterdruckquelle bei Aktivierung einen Unterdruck in der Unterdruckkammer aufbaut, und das Motor-Pumpenaggregat wird aktiviert, wenn die Summe oder das Integral über eine oder mehrere Bremspedalbetätigungsvorgänge von mindestens einer der erfassten Größen einen Betätigungsschwellenwert überschreitet. Somit kann eine bedarfsgesteuerte Aktivierung eines Motor-Pumpenaggregats zur Aufrechterhaltung eines Unterdrucks in mindestens einer Kammer eines Bremskraftverstärkers auch ohne einen Sensor zur Erfassung des Drucks in mindestens einer Kammer des Bremskraftverstärkers bereitgestellt werden.

Ganz besonders bevorzugt wird das Motor-Pumpenaggregat für mindestens eine erste Zeitdauer betrieben. Dadurch, dass die erste Zeitdauer geeignet gewählt wird, kann der Sättigungsdruck vollständig oder nahezu erreicht werden, ohne dass das Motor-Pumpenaggregat im Dauerbetrieb ist.

Besonders bevorzugt ist mindestens eine Unterdruckkammer des Bremskraftverstärkers mit einem Drucksensor und mit einem Motor-Pumpenaggregat verbunden, welches als alleinige oder zusätzliche Unterdruckquelle bei Aktivierung einen Unterdruck in der Unterdruckkammer aufbaut, und das Motor-Pumpenaggregat wird aktiviert, wenn der gemessene Druck in der Unterdruckkammer einen ersten Unterdruckschwellenwert überschreitet. Sofern ein Drucksensor bzw. Vakuumsensor vorhanden ist, der den Druck bzw. Unterdruck in mindestens einer Unterdruckkammer misst, kann die Ansteuerung des Motor-Pumpenaggregats auf Basis des gemessenen Drucks erfolgen. Die erfindungsgemäße Betrachtung der zurückliegenden Betätigungen auf Grundlage mindestens einer Größe wie z.B. dem Pedalwinkel bildet dann zweckmäßigerweise eine Rückfallebene zur Erhöhung der Zuverlässigkeit.

Ganz besonders bevorzugt wird das Motor-Pumpenaggregat solange betrieben, bis der gemessene Druck in der Unterdruckkammer einen zweiten Unterdruckschwellenwert unterschreitet, wobei der zweite Unterdruckschwellenwert vorzugsweise einem niedrigeren Absolutdruck als der erste Unterdruckschwellenwert entspricht. Durch diese Hysterese in der Ansteuerung des Motor-Pumpenaggregats erfolgt eine bedarfsgerechte Ansteuerung des Motor-Pumpenaggregats, welche eine Bremskraftverstärkung ohne den Energieverbrauch und mögliche Komfortbeeinträchtigungen (wie Geräusche) eines Dauerbetriebes des Motor-Pumpenaggregats.

Besonders bevorzugt wird die aktuell bestimmte Summe oder das aktuell bestimmte Integral über mehrere zeitlich aufeinanderfolgende Werte mindestens einer der erfassten Größen auf den Wert Null zurückgesetzt, nachdem das Motor-Pumpenaggregat für mindestens eine erste Zeitdauer betrieben wurde und/oder solange betrieben wurde, bis der gemessene Druck in mindestens einer Kammer einen zweiten Unterdruckschwellenwert unterschreitet. Wenn sichergestellt ist, dass hinreichender Unterdruck vorhanden ist, kann die Betrachtung zurückliegender Betätigungen bzw. der Regelungszyklus erneut beginnen.

Es ist vorteilhaft, wenn zwei zur Ermittlung einer Bremspedalbetätigung geeignete Sensoren vorhanden sind, insbesondere ein Sensor zur Erfassung des Bremspedalwinkels oder Bremspedalwegs und/oder ein Wegsensor am Hauptbremszylinder und/oder ein Sensor zur Erfassung des aufgebauten Bremsdrucks, und dass ein Vergleich der Sensordaten vorgenommen wird. Hierbei können aus anderen Gründen, wie dem Betrieb eines Generators, erforderliche Sensoren in die Ansteuerung des Motor-Pumpenaggregats einbezogen werden, wodurch eine von einem Drucksensor unabhängige Rückfallebene bzw. redundante Abschätzung des verbleibenden Unterdrucks erfolgt. Die Zuverlässigkeit wird hierbei mit minimalem Kostenaufwand erhöht.

Gemäß einer bevorzugten Ausführungsform der Erfindung wird mittels einer mit dem Hauptbremszylinder verbindbaren zusätzlichen Druckquelle ein Aufbau von Bremsmoment in mindestens einer Radbremse des Fahrzeugs bewirkt, wenn das Motor-Pumpenaggregat für mindestens eine zweite Zeitdauer aktiviert war, ohne dass der Druck in mindestens einer Kammer einen zweiten Unterdruckschwellenwert unterschreitet, oder wenn die aus einem Vergleich der Sensordaten ermittelte Verstärkung des Bremskraftverstärkers einen vorgegebenen Verstärkungsschwellenwert unterschreitet. Somit kann im Falle eines Defekts des Motor-Pumpenaggregats oder des Bremskraftverstärkers eine Unterstützung der Bremsung durch den Fahrer z.B. mittels einer Hydraulikpumpe erfolgen.

Zweckmäßigerweise erfolgt eine Warnung des Fahrers, insbesondere durch eine Signallampe, wenn der abgeschätzte verbleibende Unterdruck in mindestens einer Unterdruckkammer einen Mindestschwellenwert häufiger unterschreitet als ein vorbestimmter Häufigkeitsschwellenwert. Indem vereinzelte Vorkommen eines als zu niedrig abgeschätzten Unterdrucks nicht sofort an den Fahrer gemeldet werden, wird dieser nicht unnötig beunruhigt, wenn z.B. eine kurzzeitige Störung eines Sensorsignals vorkommt. Tritt dies jedoch häufiger auf, so dass ein Häufigkeitsschwellenwert für das Auftreten dieses Fehlers überschritten wird, so wird der Fahrer gewarnt und kann z.B. eine Werkstatt aufsuchen.

Die Erfindung betrifft weiterhin ein Bremssystem für ein Kraftfahrzeug, das einen Bremskraftverstärker, der durch mindestens eine bewegliche Trennwand in mindestens eine Unterdruckkammer und mindestens eine Arbeitskammer geteilt ist, wobei mindestens eine Unterdruckkammer mit einer Unterdruckquelle zum Aufbau eines Unterdrucks verbunden ist oder verbunden werden kann, ein Motor-Pumpenaggregat als alleinige oder zusätzliche Unterdruckquelle, mindestens einen mit dem Bremskraftverstärker verbundenen Hauptbremszylinder, in denen nach Maßgabe einer Bremspedalbetätigung Bremsdruck aufgebaut wird, mindestens eine mit einem Hauptbremszylinder verbundene Radbremsen, mindestens einen Sensor, der mindestens eine Größe wie Weg und/oder Winkel und/oder Kraft einer Bremspedalbetätigung und/oder einen aufgebauten Bremsdruck erfasst, umfasst. Erfindungsgemäß weist das Bremssystem ferner ein elektronisches Steuergerät auf, welches mit mindestens einem der Sensoren zur Erfassung von Bremspedalbetätigung und/oder Bremsdruck verbunden ist und ein Verfahren nach mindestens einem der vorhergehenden Ansprüche ausführt.

Vorzugsweise sind sowohl ein Sensor, der den Pedalwinkel oder Pedalweg einer Bremspedalbetätigung erfasst, als auch ein Sensor zur Erfassung des aufgebauten Bremsdrucks vorhanden, und das elektronische Steuergerät ist mit beiden verbunden. Somit können Sensoren, die häufig ohnehin vorhanden sind, für eine redundante Ansteuerung des Motor-Pumpenaggregats bzw. eine weitgehende Überwachung der Funktion des Bremskraftverstärkers eingesetzt werden.

Es ist vorteilhaft, wenn eine mit mindestens einer Radbremse verbindbare hydraulische Pumpe vorhanden ist. Im Falle eines Defekts des Bremskraftverstärkers oder wenn der Aussteuerpunkt erreicht ist, kann ein zusätzliches Bremsmoment durch eine hydraulische Pumpe aufgebaut werden, welche z.B. zur Bereitstellung einer Fahrdynamikregelung häufig ohnehin vorhanden ist.

Weiterhin betrifft die Erfindung die Verwendung eines erfindungsgemäßen Bremssystems in einem Kraftfahrzeug, welches von einer Verbrennungskraftmaschine und/oder mindestens einer elektrischen Maschine angetrieben wird. Gerade ein in Fahrzeugen mit zumindest teilweise elektrischem Antrieb erforderlicher Pedalweg- bzw. Pedalwinkelsensor eignet sich gut für die Betrachtung zurückliegender Betätigungsvorgänge.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein Ausführungsbeispiel eines Kraftfahrzeugbremssystems,
- Fig. 2: einen Hauptbremszylinder mit vorgeschaltetem Vakuumbremskraftverstärker,
- Fig. 3: ein Diagramm des Unterdrucks in einem Vakuumbremskraftverstärker bei mehreren aufeinanderfolgenden Bremsvorgängen, und
- Fig. 4: ein Ausführungsbeispiel eines erfindungsgemäßen Verfahrens zur Ansteuerung einer elektrischen Vakuumpumpe.

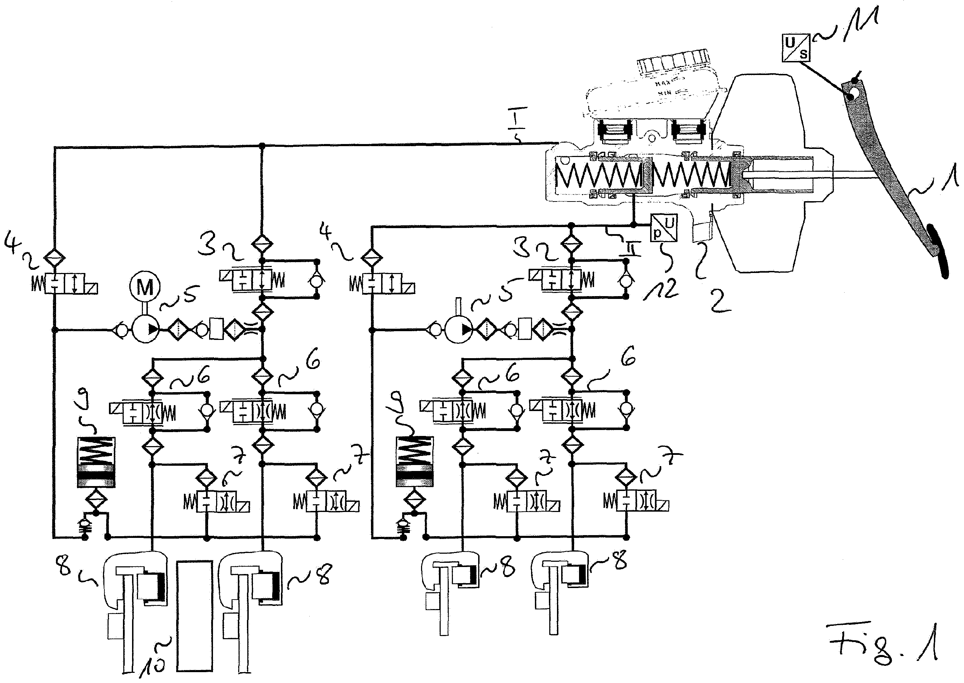

Fig. 1 zeigt ein Ausführungsbeispiel eines Kraftfahrzeugbremssystems, welches zur Durchführung des erfindungsgemäßen Verfahrens geeignet ist. Das vom Fahrer betätigte Bremspedal 1 wirkt direkt auf einen mit Hilfskraft betriebenen Tandemhauptbremszylinder 2, bei dem also die Betätigungskraft des Fahrers durch einen Vakuumbremskraftverstärker verstärkt wird. Der Tandemhauptbremszylinder baut Druck in zwei im Wesentlichen identischen Bremskreisen I und II auf, wobei diese sowohl achsweise als auch diagonal den Rädern zugeordnet sein können. Die Bremsflüssigkeit fließt durch Trennventile 3 und Einlassventile 6 in die Radbremsen bzw. Radbremszylinder 8, die ein Bremsmoment an den Rädern aufbauen. Werden die Auslassventile 7 geöffnet, so kann Bremsflüssigkeit in die Niederdruckspeicher 9 abgelassen werden. Durch Aktivierung der Hydraulikpumpen 5 wird ein vom Fahrer unabhängiger Druckaufbau in einer oder mehreren Radbremsen ermöglicht, wobei hierzu die Elektronischen Umschaltventile 4 geöffnet und die Trennventile 3 geschlossen werden.

Bei dem gezeigten Bremssystem handelt es sich um ein regeneratives Bremssystem, welches eine Rekuperation von Bremsenergie ermöglicht. Zu diesem Zweck befindet sich an einer der Achsen ein elektrischer Generator 10, welcher elektrisch-regeneratives Bremsen ermöglicht. Hierbei wird der Verzögerungswunsch des Fahrers anhand eines mit dem Bremspedal verbundenen Pedalwinkelsensors oder eines Pedalwegsensors 11 erfasst und das Generatorbremsmoment entsprechend geregelt. Um die Effizienz der Rekuperation zu erhöhen, wird in einem Bereich niedriger Verzögerung das Bremsmoment nur von dem Generator aufgebaut. Dann kann ein für den Fahrer angenehmes Pedalgefühl dadurch bereitgestellt werden, dass in einen oder beide Niederdruckspeicher 9 ein Volumen von Bremsflüssigkeit aufgenommen wird, welches in den Radbremsen die entsprechende Verzögerung erzeugen würde. Das erfindungsgemäße Verfahren kann aber auch mit einem Bremssystem ohne elektrischen Generator durchgeführt werden.

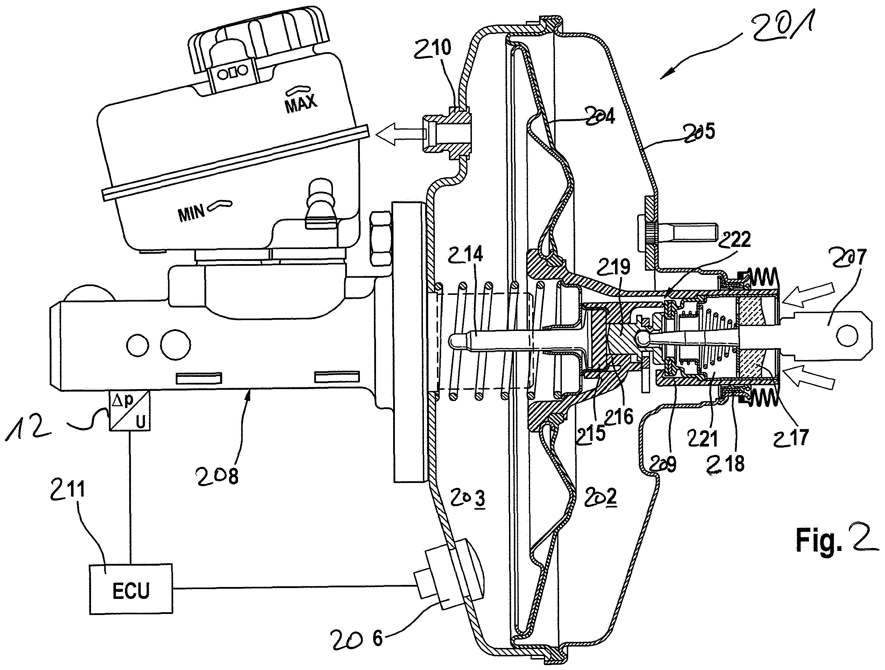

Figur 2 zeigt einen Hauptbremszylinder 208 mit vorgeschaltetem Vakuum- bzw. Unterdruckbremskraftverstärker 201, der auch als "Booster" bezeichnet wird. Der Unterdruckbremskraftverstärker 201 weist ein Gehäuse 205 auf, das in eine Arbeitskammer 202 und eine Unterdruckkammer 203 aufgeteilt ist. Dies erfolgt durch eine bewegliche Trennwand 204, die mit einer axial beweglichen Gummimembran versehen ist. Mittig im Unterdruckbremskraftverstärker 201 ist eine Steuernabe 209 angeordnet, deren Funktion nachfolgend näher erläutert wird. Die Kraftabgabe erfolgt über ein Kraftabgabeglied 214, das sich über eine Reaktionsscheibe 215 an einer Stufe 216 abstützt. Auf der anderen Seite durchragt die Steuernabe 209 das Gehäuse 205 und ist zur Atmosphäre über einen Filter 217 axial geöffnet. Mittels einer formschlüssig eingesetzten Dichtung 218 wird die Arbeitskammer 202 zur Umgebung abgedichtet. Die Kraftübertragung auf die Reaktionsscheibe 215 erfolgt über einen Ventilkolben 219, der auf einen Kugelkopf einer Kolbenstange 207 aufgeklemmt ist.

Die Kolbenstange 207 durchragt einen Luftraum 221 und steht mit einem nicht dargestellten Betätigungspedal in Verbindung. Im Luftraum 221 ist ein von der Kolbenstange 207 durchragtes Tellerventil 222 eingesetzt. Das Tellerventil 222 ist so angeordnet, dass es den Luftraum 221 zum Verstärkerinneren abtrennt, wie es in der hier dargestellten Ruhestellung des Unterdruckbremskraftverstärkers 201 der Fall ist. In dieser Ruhestellung wird die Luftzufuhr zur Arbeitskammer 202 abgesperrt. Somit herrscht in der Arbeitskammer 202 ein Unterdruck, da die Arbeitskammer 202 über Öffnungen mit der Unterdruckkammer 203 verbunden ist und da die Unterdruckkammer 203 über einen Unterdruckanschluss 10 mit einer nicht dargestellten Unterdruckquelle, vorzugsweise einer elektrischen Vakuumpumpe, verbunden ist. Mit Hilfe einer Sensoreinheit 206 wird der Druck in der Unterdruckkammer 203 gemessen.

Wird ein mit der Kolbenstange 207 verbundenes Bremspedal betätigt und somit die Kolbenstange 207 und der Ventilkolben 219 verschoben, so wird das Tellerventil 222 betätigt und die Unterdruckkammer 203 und die Arbeitskammer 202 stehen nicht mehr miteinander in Verbindung. Im weiteren Verlauf der Bewegung wird eine Verbindung zwischen der Arbeitskammer 202 und der Außenluft durch das Tellerventil 222 geöffnet. Durch den an der beweglichen Trennwand 204 anliegende Druckunterschied zwischen Arbeitskammer 202 und Unterdruckkamer 203 wird die Eingangskraft am Bremspedal unterstützt und ein dem Unterdruckbremskraftverstärker 201 nachgeschalteter Hauptbremszylinder 208 mittels des Kraftabgabegliedes 214 betätigt. In dieser Bereitschaftsstellung bewirkt jede geringfügige Änderung der Pedalkraft eine Vergrößerung oder Verkleinerung der Druckdifferenz auf beiden Seiten der Trennwand 204 und bewirkt über den Hauptbremszylinder 208 eine Erhöhung oder Reduzierung des hydraulischen Drucks im Bremssystem und damit eine geregelte Abbremsung des Kraftfahrzeugs.

Die maximal mögliche Unterstützungskraft des Unterdruckbremskraftverstärkers 201 ist gegeben, wenn die Arbeitskammer 202 vollständig belüftet ist und Atmosphärendruck herrscht. Dieser Zustand wird als Aussteuerpunkt bezeichnet. Im Aussteuerpunkt ist also die maximale Druckdifferenz zwischen der Arbeitskammer 202 und der Unterdruckkammer 203 erreicht. Eine weitere Erhöhung der Kraft auf den Hauptbremszylinderkolben, der sich an das Kraftabgabeglied 214 anschließt, ist nur durch eine noch größere Pedalkraft des Fahrers möglich, wobei sich der hydraulische Druck im Bremssystem nur noch unverstärkt erhöht. Die führt dazu, dass nach dem Überschreiten des Aussteuerpunktes eine weitere Erhöhung der Bremskraft einen wesentlich erhöhten Kraftaufwand am Bremspedal erfordert.

Zur Behebung dieses Problems ist es bekannt, beim Erreichen des Aussteuerpunktes auf eine hydraulische Verstärkung umzuschalten und eine hydraulische Pumpe anzusteuern, die einen zusätzlichen Bremsdruck aufbaut. Für diese zusätzliche Bremskraftunterstützung ist es jedoch notwendig, den Aussteuerpunkt genau zu erkennen, um die zusätzliche hydraulische Verstärkung bedarfsgerecht zuzuschalten. Da der Unterdruckbremskraftverstärker 201 lediglich einen Drucksensor 206 zur Ermittlung des Drucks in der Unterdruckkammer 203 aufweist, wird der Aussteuerpunkt geschätzt bzw. berechnet.

Defekte des Drucksensors 206 dürfen nicht zu einer fehlerhaften Erkennung des Aussteuerpunktes führen, und auch ein zu hoher Druck in der Unterdruckkammer (bzw. mangelnder Unterdruck) muss sicher erkannt werden. Daher wird vorzugsweise eine Plausibilisierung des von der Sensoreinheit 206 gemessenen Druckwerts durchgeführt und mögliche Defekte der Sensoreinheit 206 oder des Unterdruckbremskraftverstärkers 201 werden ermittelt, d.h. Sensorfehler oder ein Ausfall des Unterdruckbremskraftverstärkers 201 werden zuverlässig erkannt, wodurch geeignete Gegenmaßnahmen und/oder eine Warnung des Fahrers vorgenommen werden kann.

Um bei kleinem Bauraum eine hohe Verstärkung zu erreichen, kann das Bremssystem auch einen Tandem-Bremskraftverstärker umfassen, der zwei hintereinander geschalteten Vakuumbremskraftverstärkern entspricht und somit zwei Unterdruckkammern und zwei Arbeitskammern aufweist. Auch bei diesen Tandem-Bremskraftverstärkern ist das erfindungsgemäße Verfahren entsprechend anwendbar.

Bei jeder Bremsbetätigung "verbraucht" der Vakuumbremskraftverstärker eine gewisse Menge seines Vakuumvorrats, d.h. der Druck in der Unterdruckkammer 203 nimmt zu.

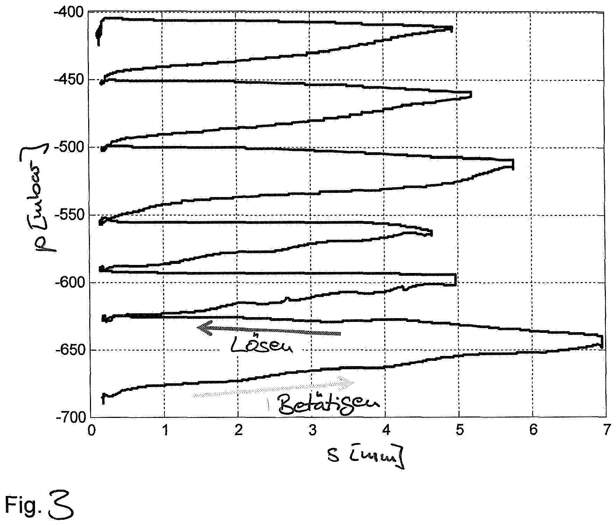

Fig. 3 zeigt ein Diagramm des Unterdrucks in einem Vakuumbremskraftverstärker bei mehreren aufeinanderfolgenden Bremsvorgängen, wenn keine Unterdruckquelle aktiv ist. Auf der Ordinate ist hierbei der Druck p in der Unterdruckkammer bezogen auf den Atmosphärendruck aufgetragen, d.h. bei einem Unterdruck von 0 mbar würde keine Bremskraftunterstützung mehr erfolgen, während z.B. ein Druck p von -680 mbar bzw. ein Unterdruck von 680 mbar, wobei der Druck in der Unterdruckkammer um 680 mbar unter dem Atmosphärendruck liegt, in diesem Beispiel eine optimale Hilfskraftunterstützung gewährleistet. Die Abszisse gibt den Verschiebeweg s des Hauptbremszylinders an, wobei ein größerer Weg einer stärkeren Bremsbetätigung, d.h. einer größeren Pedalkraft bzw. einem höheren Druck im Hauptbremszylinder entspricht. Der Pfeil "Betätigen" deutet die Zunahme des Verschiebewegs mit stärkerer Bremsbetätigung an, während der Pfeil "Lösen" das Lösen des Bremspedals durch den Fahrer andeutet. Anstelle eines Hauptbremszylinderwegsensors könnte entsprechend ein Pedalkraft- oder Pedalwinkelsensor am Bremspedal eingesetzt werden.

Im Diagramm ist zu erkennen, dass eine stärkere Bremspedalbetätigung bzw. ein größerer Verschiebeweg des Hauptbremszylinders auch zu einem entsprechend größeren Druckanstieg in der Unterdruckkammer führt. Um bei jeder Bremsung eine gleiche Bremskraftverstärkung bereitstellen zu können, muss die Unterdruckkammer daher mit einer Unterdruckquelle wie z.B. einer Vakuumpumpe verbunden werden.

Bei konventionellen Ottomotoren dient das Saugrohr des Verbrennungsmotors als Unterdruckquelle, während Dieselmotoren häufig eine mechanisch angetriebene Vakuumpumpe verwenden.

Diese arbeiten kontinuierlich, wodurch das Unterdruckniveau ständig auf einem nahezu konstanten Wert gehalten wird und somit immer die größtmögliche Hilfskraft bereitsteht. In manchen Bremssystemkonfigurationen erfolgt die Unterdruckerzeugung jedoch allein oder zusätzlich über eine elektrische Vakuumpumpe (EVP). Dies ermöglicht z.B. bei Hybridfahrzeugen mit Elektrozusatzantrieb die temporäre Abschaltung des Verbrennungsmotors, um zur Verringerung bzw. Vermeidung von Emissionen allein mittels Elektromotor fahren zu können (man spricht auch von "Segelbetrieb"). Damit im Segelbetrieb auch nach mehreren Bremsmanövern noch die volle Bremskraftverstärkung sichergestellt ist, wird die elektrische Vakuumpumpe aktiviert und evakuiert die Unterdruckkammer. Um dabei einen Dauerbetrieb der elektrischen Vakuumpumpe zu vermeiden, ist deren Regelung vorzugsweise als Hystereschaltung mit einem oberem und einem unterem Schaltpunkt ausgeführt, wobei das Signal eines Vakuumsensors ausgewertet wird. Die Vakuumpumpenregelung sorgt dafür, dass stets ein gewisses Unterdruckniveau als Energiequelle für den Bremskraftverstärker zur Verfügung steht, auch wenn der Verbrennungsmotor nicht in Betrieb ist.

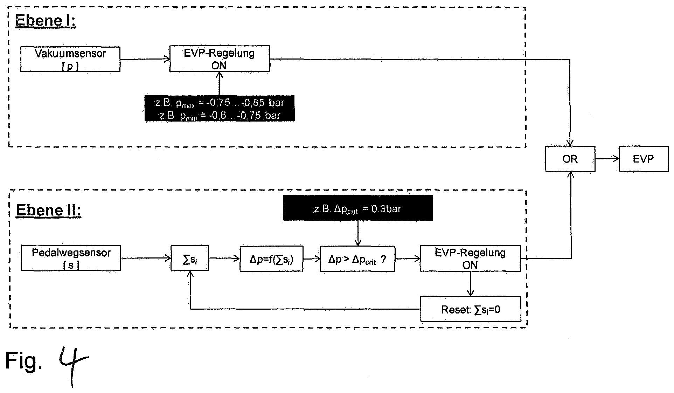

Fig. 4 zeigt ein Ausführungsbeispiel eines erfindungsgemäßen Verfahrens zur Ansteuerung einer elektrischen Vakuumpumpe, wobei die Ebene 1 nicht in allen Ausführungsformen der Erfindung erforderlich ist.

Wenn die Anforderungen an die Zuverlässigkeit nicht sehr streng sind, weil z.B. in einem leichten Fahrzeug auch ohne Bremskraftverstärkung eine hinreichende Bremsverzögerung aufgebaut werden kann, um gesetzliche Vorgaben bzw. technische Standards zu erfüllen, kann die Ansteuerung einer elektrischen Vakuumpumpe allein mit dem als Ebene II bezeichneten Verfahren erfolgen:
Ein Pedalwegsensor erfasst den Betätigungsweg s des Bremspedals und führt das Ausgangssignal einer Auswerteeinheit zu, insbesondere einem Steuergerät eines elektronisch geregelten Bremssystems. Die Auswerteeinheit registriert jede Pedalbetätigung, wobei der ermittelte Betätigungsweg aufsummiert ∑sᵢ und vorzugsweise mittels einer auf der Auswerteeinheit hinterlegten Kennlinie oder einem Kennfeld in einen Vakuumverbrauch Δp innerhalb des Bremskraftverstärkers umgerechnet wird. Diese Kennlinie kann beispielsweise vorab in einem Kalibrieraufbau gemessen worden sein. Wenn der aufsummierte Betätigungsweg ∑sᵢ einen vorgegebenen Betätigungsschwellenwert überschreitet bzw. der berechnete Vakuumverbrauch Δp eine definierte kritische Schwelle Δp_{crit} überschreitet, so wird die elektrische Vakuumpumpe EVP aktiviert. Diese baut einen Unterdruck auf beziehungsweise verringert den Druck in der mindestens einen Unterdruckkammer, bis sich ein Sättigungsdruck einstellt, der also dem unter den vorliegenden Gegebenheiten erreichbaren Vakuum entspricht. Somit ist nach einer gewissen Laufzeit der EVP das Unterdruckniveau im Bremskraftverstärker wieder hergestellt worden und die EVP kann wieder deaktiviert werden. Anschließend wird das Betätigungsintegral ∑sᵢ bzw. der berechnete Vakuumverbrauch Δp wieder auf null zurückgesetzt, danach beginnt der beschriebene Regelungszyklus erneut.

Das beschriebene Verfahren ermöglicht es, auf den Einsatz eines Vakuumsensors zur Ansteuerung der Vakuumpumpe zu verzichten, womit ein verringerter Produktionsaufwand und geringere Kosten verbunden sind.

Gemäß einer alternativen Ausführungsform des erfindungsgemäßen Verfahrens bzw. des erfindungsgemäßen Bremssystems kann die Betrachtung bereits erfolgter Bremspedalbetätigungen auch auf Grundlage der Ausgangssignale eines Pedalwinkelsensors oder eines Pedalkraftsensors erfolgen.

Gemäß einer weiteren Ausführungsform des erfindungsgemäßen Verfahrens bzw. des erfindungsgemäßen Bremssystems erfolgt die Betrachtung bereits erfolgter Bremspedalbetätigungen auf Grundlage eines Drucksensors, der den hydraulischen Druck im Hauptbremszylinder bzw. einem mit diesem verbundenen Bremskreis erfasst.

Anhand der Auslegung des Bremssystems und/oder unter kontrollierten Bedingungen vorgenommenen Kalibriermessungen kann hierbei z.B. ein hydraulisches Druck-Volumen-Kennfeld bestimmt werden.

Gemäß einer besonders bevorzugten Ausführungsform der Erfindung sind sowohl ein Sensor zur Erfassung des Bremspedalwinkels als auch ein Sensor zur Erfassung des hydraulischen Drucks im Hauptbremszylinder vorhanden. Dann können beide Größen unabhängig voneinander zur Ansteuerung der elektrischen Vakuumpumpe herangezogen werden, womit eine zweite Rückfallebene zur Verfügung steht. Aus einem Vergleich des Hauptbremszylinderdrucks mit dem Bremspedalwinkel kann aber auch ein Erreichen des Aussteuerpunkts des Bremskraftverstärkers erkannt werden, so dass z.B. eine hydraulische Pumpe zur Bremsunterstützung aktiviert werden kann.

In manchen Fällen - wie z.B. bei schweren Fahrzeugen -kann das Sicherheitskonzept des Bremssystems weitere Überwachungsmaßnahmen und/oder Redundanzen hinsichtlich der Ansteuerung einer Vakuumpumpe erforderlich machen, um in allen Betriebszuständen des Bremssystems ein Mindest-Unterdruckniveau und damit zur Erfüllung gesetzlicher oder technischer Vorgaben ein Mindestbremsvermögen sicherzustellen.

Daher erfolgt gemäß eines bevorzugten Ausführungsbeispiels der Erfindung eine redundante Ansteuerung einer elektrischen Vakuumpumpe sowohl mit dem in Ebene I als auch mit dem in Ebene II gezeigten Verfahren.

In Ebene I erfasst ein Vakuumsensor den Druck p in mindestens einer Unterdruckkammer des Bremskraftverstärkers. Wenn der Druck p einen ersten Unterdruckschwellenwert pₘᵢₙ überschreitet, der verbleibende Unterdruck also ein Nachlassen der Verstärkungswirkung erwarten lässt, so wird die elektrische Vakuumpumpe aktiviert. Bezogen auf Atmosphäre kann der erste Unterdruckschwellenwert pₘᵢₙ z.B. zwischen -600 mbar und -750 mbar liegen. Die elektrische Vakuumpumpe verringert den Druck im Bremskraftverstärker, wobei sich dieser einem durch das Saugvermögen der Vakuumpumpe und die Leckrate der Unterdruckkammer beeinflussten Sättigungsdruck, also einem maximal erreichbaren Unterdruck annähert. Sobald der Druck p unter einen zweiten Unterdruckschwellenwert pₘₐₓ gefallen ist, wird die elektrische Vakuumpumpe deaktiviert. Bezogen auf Atmosphäre kann der zweite Unterdruckschwellenwert pₘₐₓ z.B. zwischen -750 mbar und -850 mbar liegen. Indem die Regelung mit einer Hysterese arbeitet, verringert sich die Häufigkeit der Aktivierung der elektrischen Vakuumpumpe, wobei jeweils ein für mehrere Bremsvorgänge ausreichendes Vakuum in der Unterdruckkammer bereitgestellt wird.

Parallel und unabhängig erfolgt die bereits beschriebene Ansteuerung in Ebene II anhand einer Betrachtung bereits erfolgter Bremspedalbetätigungen. Zweckmäßigerweise erfolgt die Aktivierung der elektrischen Vakuumpumpe EVP immer dann, wenn mindestens eine der beiden Regelungsebenen ein Anschalt-Signal für die EVP ausgibt (dies ist in der Zeichnung durch die Box "OR" bzw. oder angedeutet). Somit ist jeweils noch eine Rückfallebene vorhanden, wenn eines der beiden Ansteuerverfahren der z.B. aufgrund eines Defekts des Vakuumsensors versagt. Eine sichere und komfortable Betätigung des Bremssystems durch den Fahrer ist gewährleistet.

## Patentansprüche

1. Verfahren zum Betreiben eines Bremssystems mit einem Bremskraftverstärker, der durch mindestens eine bewegliche Trennwand in mindestens eine Unterdruckkammer und mindestens eine Arbeitskammer geteilt ist, wobei mindestens eine Unterdruckkammer mit einer Unterdruckquelle zum Aufbau eines Unterdrucks verbunden ist oder verbunden werden kann, mit mindestens einem Sensor, der mindestens eine Größe wie Weg und/oder Winkel und/oder Kraft einer Bremspedalbetätigung und/oder einen Bremsdruck erfasst, welcher in mindestens einem mit dem Bremskraftverstärker verbundenen Hauptbremszylinder nach Maßgabe einer Bremspedalbetätigung aufgebaut wird, wobei eine Abschätzung des verbleibenden Unterdrucks in mindestens einer Unterdruckkammer aus einer Betrachtung bereits erfolgter Bremspedalbetätigungen auf Grundlage mindestens einer der erfassten Größen erfolgt, **dadurch gekennzeichnet, dass** die zur Abschätzung des verbleibenden Unterdrucks stattfindende Betrachtung bereits erfolgter Bremspedalbetätigungen eine Integration oder Summenbildung über mehrere zeitlich aufeinanderfolgende Werte mindestens einer der erfassten Größen umfasst.

2. Verfahren nach Anspruch 1, **dadurch gekennzeichnet, dass** nach Maßgabe oder proportional zu mindestens einer der erfassten Größen ein Bremsmoment erzeugt wird, indem mindestens ein elektrischer Antrieb des Fahrzeugs als Generator betrieben wird und/oder in mindestens einer Radbremse des Fahrzeugs durch einen mit dem Bremskraftverstärker verbundenen Hauptbremszylinder Bremsdruck aufgebaut wird.

3. Verfahren nach Anspruch 1 oder 2, **dadurch gekennzeichnet, dass** der abgeschätzte verbleibende Unterdruck mit steigender aktuell bestimmter Summe oder steigendem aktuell bestimmten Integral über mehrere zeitlich aufeinanderfolgende Werte mindestens einer der erfassten Größen abnimmt, wobei vorzugsweise eine Kennlinie oder ein Kennfeld zur Kalibrierung ausgewertet wird.

4. Verfahren nach einem der Ansprüche 1 bis 3, **dadurch gekennzeichnet, dass** mindestens eine Unterdruckkammer mit einem Motor-Pumpenaggregat verbunden ist, welches als alleinige oder zusätzliche Unterdruckquelle bei Aktivierung einen Unterdruck in der Unterdruckkammer aufbaut, und dass das Motor-Pumpenaggregat aktiviert wird, wenn die Summe oder das Integral über eine oder mehrere Bremspedalbetätigungsvorgänge von mindestens einer der erfassten Größen einen Betätigungsschwellenwert überschreitet.

5. Verfahren nach Anspruch 4, **dadurch gekennzeichnet, dass** das Motor-Pumpenaggregat für mindestens eine erste Zeitdauer betrieben wird.

6. Verfahren nach mindestens einem der Ansprüche 1 bis 5, **dadurch gekennzeichnet, dass** mindestens eine Unterdruckkammer mit einem Drucksensor und mit einem Motor-Pumpenaggregat verbunden ist, welches als alleinige oder zusätzliche Unterdruckquelle bei Aktivierung einen Unterdruck in der Unterdruckkammer aufbaut, und dass das Motor-Pumpenaggregat aktiviert wird, wenn der gemessene Druck in der Unterdruckkammer einen ersten Unterdruckschwellenwert überschreitet.

7. Verfahren nach Anspruch 6, **dadurch gekennzeichnet, dass** das Motor-Pumpenaggregat solange betrieben wird, bis der gemessene Druck in der Unterdruckkammer einen zweiten Unterdruckschwellenwert unterschreitet, wobei der zweite Unterdruckschwellenwert vorzugsweise einem niedrigeren Absolutdruck als der erste Unterdruckschwellenwert entspricht.

8. Verfahren nach mindestens einem der Ansprüche 1 bis 7, **dadurch gekennzeichnet, dass** die aktuell bestimmte Summe oder das aktuell bestimmte Integral über mehrere zeitlich aufeinanderfolgende Werte mindestens einer der erfassten Größen auf den Wert Null zurückgesetzt wird, nachdem das Motor-Pumpenaggregat für mindestens eine erste Zeitdauer betrieben wurde und/oder solange betrieben wurde, bis der gemessene Druck in der Unterdruckkammer einen zweiten Unterdruckschwellenwert unterschreitet.

9. Verfahren nach mindestens einem der vorhergehenden Ansprüche, **dadurch gekennzeichnet, dass** zwei zur Ermittlung einer Bremspedalbetätigung geeignete Sensoren vorhanden sind, insbesondere ein Sensor zur Erfassung des Bremspedalwinkels oder Bremspedalwegs und/oder ein Wegsensor am Hauptbremszylinder und/oder ein Sensor zur Erfassung des aufgebauten Bremsdrucks, und dass ein Vergleich der Sensordaten vorgenommen wird.

10. Verfahren nach mindestens einem der Ansprüche 6 bis 9, **dadurch gekennzeichnet, dass** mittels einer mit dem Hauptbremszylinder verbindbaren zusätzlichen Druckquelle ein Aufbau von Bremsmoment in mindestens einer Radbremse des Fahrzeugs bewirkt wird, wenn das Motor-Pumpenaggregat für mindestens eine zweite Zeitdauer aktiviert war, ohne dass der Druck in der Unterdruckkammer einen zweiten Unterdruckschwellenwert unterschreitet, oder wenn die aus einem Vergleich der Sensordaten ermittelte Verstärkung des Bremskraftverstärkers einen vorgegebenen Verstärkungsschwellenwert unterschreitet.

11. Verfahren nach mindestens einem der vorhergehenden Ansprüche **dadurch gekennzeichnet, dass** eine Warnung des Fahrers erfolgt, wenn der abgeschätzte verbleibende Unterdruck in mindestens einer Unterdruckkammer einen Mindestschwellenwert häufiger unterschreitet als ein vorbestimmter Häufigkeitsschwellenwert.

12. Bremssystem für ein Kraftfahrzeug, umfassend einen Bremskraftverstärker, der durch mindestens eine bewegliche Trennwand in mindestens eine Unterdruckkammer und mindestens eine Arbeitskammer geteilt ist, wobei mindestens eine Unterdruckkammer mit einer Unterdruckquelle zum Aufbau eines Unterdrucks verbunden ist oder verbunden werden kann, ein Motor-Pumpenaggregat als alleinige oder zusätzliche Unterdruckquelle , mindestens einen mit dem Bremskraftverstärker verbundenen Hauptbremszylinder, in denen nach Maßgabe einer Bremspedalbetätigung Bremsdruck aufgebaut wird, mindestens eine mit einem Hauptbremszylinder verbundene Radbremsen, mindestens einen Sensor, der mindestens eine Größe wie Weg und/oder Winkel und/oder Kraft einer Bremspedalbetätigung und/oder einen aufgebauten Bremsdruck erfasst, **gekennzeichnet durch** ein elektronisches Steuergerät, welches mit mindestens einem der Sensoren zur Erfassung von Bremspedalbetätigung und/oder Bremsdruck verbunden ist und ein Verfahren nach mindestens einem der vorhergehenden Ansprüche ausführt.

13. Bremssystem nach Anspruch 12, **dadurch gekennzeichnet, dass** sowohl ein Sensor, der den Pedalwinkel oder Pedalweg einer Bremspedalbetätigung erfasst, als auch ein Sensor zur Erfassung des aufgebauten Bremsdrucks vorhanden sind und das elektronische Steuergerät mit beiden verbunden ist.

14. Bremssystem nach Anspruch 12 oder 13, **dadurch gekennzeichnet, dass** eine mit mindestens einer Radbremse verbindbare hydraulische Pumpe vorhanden ist.

15. Verwendung eines Bremssystems nach mindestens einem der Ansprüche 12 bis 14 in einem Kraftfahrzeug, welches von einer Verbrennungskraftmaschine und/oder mindestens einer elektrischen Maschine angetrieben wird.

## Claims

1. Method for operating a brake system having a brake booster which is divided into at least one negative-pressure chamber and at least one working chamber by at least one movable partition, wherein at least one negative-pressure chamber is or can be connected to a negative-pressure source for the build-up of a negative pressure, and having at least one sensor which detects at least one variable such as travel and/or angle and/or force of a brake pedal actuation and/or a brake pressure that is built up, in accordance with a brake pedal actuation, in at least one master brake cylinder that is connected to the brake booster, **wherein** an estimation of the remaining negative pressure in at least one negative-pressure chamber is performed on the basis of at least one of the detected variables taking into consideration past brake pedal actuations, **characterized in that** the taking into consideration of past brake pedal actuations for the estimation of the remaining negative pressure includes an integration or summation over multiple temporally successive values of at least one of the detected variables.

2. Method according to Claim 1, **characterized in that**, in accordance with or proportionally to at least one of the detected variables, a braking torque is generated by virtue of at least one electric drive of the vehicle being operated as a generator and/or by virtue of a brake pressure being built up in at least one wheel brake of the vehicle by means of a master brake cylinder that is connected to the brake booster.

3. Method according to Claim 1 or 2, **characterized in that** the estimated remaining negative pressure decreases as the presently determined sum or presently determined integral over multiple temporally successive values of at least one of the detected variables increases, wherein for calibration, a characteristic curve or characteristic map is preferably evaluated.

4. Method according to one of Claims 1 to 3, **characterized in that** at least one negative-pressure chamber is connected to a motor-pump assembly which, as sole or additional negative-pressure source, builds up a negative pressure in the negative-pressure chamber when activated, and **in that** the motor-pump assembly is activated if the sum or the integral of at least one of the detected variables over one or more brake pedal actuations exceeds an actuation threshold value.

5. Method according to Claim 4, **characterized in that** the motor-pump assembly is operated for at least one first time period.

6. Method according to at least one of Claims 1 to 5, **characterized in that** at least one negative-pressure chamber is connected to a pressure sensor and to a motor-pump assembly which, as sole or additional negative-pressure source, builds up a negative pressure in the negative-pressure chamber when activated, and **in that** the motor-pump assembly is activated if the measured pressure in the negative-pressure chamber exceeds a first negative-pressure threshold value.

7. Method according to Claim 6, **characterized in that** the motor-pump assembly is operated until the measured pressure in the negative-pressure chamber falls below a second negative-pressure threshold value, wherein the second negative-pressure threshold value preferably corresponds to a lower absolute pressure than the first negative-pressure threshold value.

8. Method according to at least one of Claims 1 to 7, **characterized in that** the presently determined sum or presently determined integral over multiple temporally successive values of at least one of the detected variables is reset to the value zero after the motor-pump assembly has been operated for at least a first time period and/or has been operated until the measured pressure in the negative-pressure chamber falls below a second negative-pressure threshold value.

9. Method according to at least one of the preceding claims, **characterized in that** two sensors suitable for determining a brake pedal actuation, in particular a sensor for detecting the brake pedal angle or brake pedal travel and/or a travel sensor on the master brake cylinder and/or a sensor for detecting the built-up brake pressure, are provided, and **in that** a comparison of the sensor data is performed.

10. Method according to at least one of Claims 6 to 9, **characterized in that**, by means of an additional pressure source that can be connected to the master brake cylinder, a build-up of braking torque in at least one wheel brake of the vehicle is effected if the motor-pump assembly has been activated for a least a second time period without the pressure in the negative-pressure chamber falling below a second negative-pressure threshold value, or if the boost, determined from a comparison of the sensor data, of the brake booster falls below a predefined boost threshold value.

11. Method according to at least one of the preceding claims, **characterized in that** a warning is output to the driver if the estimated remaining negative pressure in at least one negative-pressure chamber falls below a minimum threshold value with a frequency greater than a predetermined frequency threshold value.

12. Brake system for a motor vehicle, comprising a brake booster which is divided into at least one negative-pressure chamber and at least one working chamber by at least one movable partition, wherein at least one negative-pressure chamber is or can be connected to a negative-pressure source for the build-up of a negative pressure, comprising a motor-pump assembly as sole or additional negative-pressure source, comprising at least one master brake cylinder which is connected to the brake booster and in which brake pressure is built up in accordance with a brake pedal actuation, comprising at least one wheel brake which is connected to a master brake cylinder, and comprising at least one sensor which detects at least one variable such as travel and/or angle and/or force of a brake pedal actuation and/or a built-up brake pressure, **characterized by** an electronic control unit which is connected to at least one of the sensors for detecting brake pedal actuation and/or brake pressure and which carries out a method according to at least one of the preceding claims.

13. Brake system according to Claim 12, **characterized in that** both a sensor which detects the pedal angle or pedal travel of a brake pedal actuation and also a sensor for detecting the built-up brake pressure are provided, and the electronic control unit is connected to both.

14. Brake system according to Claim 12 or 13, **characterized in that** a hydraulic pump is provided which can be connected to at least one wheel brake.

15. Use of a brake system according to at least one of Claims 12 to 14 in a motor vehicle which is driven by an internal combustion engine and/or at least one electric machine.

## Revendications

1. Procédé pour le fonctionnement d'un système de freinage comprenant un servofrein qui est divisé par au moins une paroi de séparation mobile en au moins une chambre à dépression et au moins une chambre de travail, au moins une chambre à dépression étant connectée ou pouvant être connectée à une source de dépression pour produire une dépression, au moins un capteur qui détecte au moins une grandeur telle que la course et/ou l'angle et/ou la force d'actionnement d'une pédale de frein et/ou une pression de freinage qui est produite dans au moins un maître-cylindre de frein connecté au servofrein en fonction d'un actionnement de la pédale de frein, l'évaluation de la dépression restante dans au moins une chambre à dépression étant effectué à partir d'une considération des actionnements de la pédale de frein déjà effectués sur la base d'au moins l'une des grandeurs détectées, **caractérisé en ce que** la considération d'actionnements de la pédale de frein déjà effectués se produisant pour évaluer la dépression restante comprend une intégration ou une addition portant sur plusieurs valeurs successives dans le temps d'au moins l'une des grandeurs détectées.

2. Procédé selon la revendication 1, **caractérisé en ce qu'**en fonction de, ou proportionnellement à, au moins l'une des grandeurs détectées, un couple de freinage est généré, en entraînant au moins un entraînement électrique du véhicule en tant que générateur et/ou en produisant une pression de freinage dans au moins un frein de roue du véhicule par un maître-cylindre de frein connecté au servofrein.

3. Procédé selon la revendication 1 ou 2, **caractérisé en ce que** la dépression restante évaluée diminue avec l'augmentation de la somme effectivement déterminée ou l'augmentation de l'intégrale effectivement déterminée portant sur plusieurs valeurs successives dans le temps d'au moins l'une des grandeurs détectées, une courbe caractéristique ou un champ caractéristique étant de préférence évalué(e) pour l'étalonnage.

4. Procédé selon l'une quelconque des revendications 1 à 3, **caractérisé en ce qu'**au moins une chambre à dépression est connectée à un groupe motopompe qui produit, en tant que source de dépression unique ou supplémentaire, lors de l'activation, une dépression dans la chambre à dépression, et **en ce que** le groupe motopompe est activé lorsque la somme ou l'intégrale, sur une ou plusieurs opérations d'actionnement de la pédale de frein, d'au moins l'une des grandeurs détectées, dépasse une valeur seuil d'actionnement.

5. Procédé selon la revendication 4, **caractérisé en ce que** le groupe motopompe fonctionne pendant au moins une première période de temps.

6. Procédé selon au moins l'une quelconque des revendications 1 à 5, **caractérisé en ce qu'**au moins une chambre à dépression est connectée à un capteur de pression et à un groupe motopompe, qui produit, en tant que source de dépression unique ou supplémentaire, lors de l'activation, une dépression dans la chambre à dépression, et **en ce que** le groupe motopompe est activé lorsque la pression mesurée dans la chambre à dépression dépasse une première valeur seuil de dépression.

7. Procédé selon la revendication 6, **caractérisé en ce que** le groupe motopompe fonctionne tant que la pression mesurée dans la chambre à dépression ne passe pas en dessous d'une deuxième valeur seuil de dépression, la deuxième valeur seuil de dépression correspondant de préférence à une pression absolue inférieure à la première valeur seuil de dépression.

8. Procédé selon au moins l'une quelconque des revendications 1 à 7, **caractérisé en ce que** la somme effectivement déterminée ou l'intégrale effectivement déterminée sur plusieurs valeurs successives dans le temps d'au moins l'une des grandeurs détectées est remise à la valeur zéro après que le groupe motopompe a fonctionné pendant au moins une première période de temps et/ou a fonctionné jusqu'à ce que la pression mesurée dans la chambre à dépression passe en dessous d'une deuxième valeur seuil de dépression.

9. Procédé selon au moins l'une quelconque des revendications précédentes, **caractérisé en ce que** deux capteurs aptes à déterminer un actionnement de la pédale de frein sont prévus, en particulier un capteur pour détecter l'angle de la pédale de frein ou la course de la pédale de frein et/ou un capteur de distance au niveau du maître-cylindre de frein et/ou un capteur pour détecter la pression de freinage produite, et **en ce qu'**une comparaison des données de capteurs est effectuée.

10. Procédé selon au moins l'une quelconque des revendications 6 à 9, **caractérisé en ce qu'**au moyen d'une source de pression supplémentaire pouvant être connectée au maître-cylindre de frein, il se produit un couple de freinage dans au moins un frein de roue du véhicule, lorsque le groupe motopompe a été actionné pendant au moins une deuxième période de temps sans que la pression dans la chambre à dépression ne passe en dessous d'une deuxième valeur seuil de dépression ou lorsque l'amplification du servofrein, déterminée à partir d'une comparaison des données de capteurs, passe en dessous d'une valeur seuil d'amplification prédéfinie.

11. Procédé selon au moins l'une quelconque des revendications précédentes, **caractérisé en ce qu'**un avertissement du conducteur est généré lorsque la dépression restante évaluée dans au moins une chambre à dépression passe en dessous d'une valeur seuil minimale plus souvent qu'une valeur seuil de fréquence prédéterminée.

12. Système de freinage pour un véhicule automobile, comprenant un servofrein qui est divisé par au moins une paroi de séparation en au moins une chambre à dépression et au moins une chambre de travail, au moins une chambre à dépression étant connectée ou pouvant être connectée à une source de dépression pour produire une dépression, un groupe motopompe en tant que source de dépression unique ou supplémentaire, au moins un maître-cylindre de frein connecté au servofrein, dans lesquels, en fonction d'un actionnement de la pédale de frein, une pression de freinage est générée, au moins un frein de roue connecté à un maître-cylindre de frein, au moins un capteur qui détecte au moins une grandeur telle que la course et/ou l'angle et/ou la force d'un actionnement de la pédale de frein et/ou une pression de freinage produite, **caractérisé par** un appareil de commande électronique qui est connecté à au moins l'un des capteurs pour détecter l'actionnement de la pédale de frein et/ou la pression de freinage et met en oeuvre un procédé selon au moins l'une quelconque des revendications précédentes.

13. Système de freinage selon la revendication 12, **caractérisé en ce qu'**un capteur qui détecte l'angle de la pédale ou la course de la pédale d'un actionnement de la pédale de frein ainsi qu'un capteur pour détecter la pression de freinage produite sont prévus et l'appareil de commande électronique est connecté aux deux.

14. Système de freinage selon la revendication 12 ou 13, **caractérisé en ce qu'**une pompe hydraulique pouvant être connectée à au moins un frein de roue est prévue.

15. Utilisation d'un système de freinage selon au moins l'une quelconque des revendications 12 à 14 dans un véhicule automobile qui est entraîné par un moteur à combustion interne et/ou par au moins une machine électrique.
